# EUROPEAN PATENT APPLICATION

(11) **EP 4 757 256 A1**
(43) Date of publication of application: **10.06.2026**
(21) Application number: 24860094.2
(22) Date of filing: 19.06.2024
(51) Int. Cl.: H04L 12/46, H04L 61/5007, H04L 9/40

(54) **ELECTRONIC DEVICE FOR COMMUNICATING THROUGH VIRTUAL PRIVATE NETWORK CONNECTION AND STORAGE MEDIUM THEREOF**

(30) Priority: 25.08.2023 KR 20230112147; 04.10.2023 KR 20230132089
(71) Applicant: Samsung Electronics Co., Ltd., Suwon-si, Gyeonggi-do 16677 (KR)
(72) Inventor: BANG, Seul, Suwon-si, Gyeonggi-do 16677 (KR); KIM, Dongyeol, Suwon-si, Gyeonggi-do 16677 (KR); SHIN, Hyoshin, Suwon-si, Gyeonggi-do 16677 (KR)
(74) Representative: Gulde & Partner
(86) International application number: PCT/KR2024/008485
(87) International publication number: WO 2025/048170

(57) **Abstract**

An electronic device for communicating through a virtual private network (VPN) connection and a storage medium thereof are disclosed. The electronic device may comprise: a memory for storing instructions; a communication circuit; and at least one processor operatively connected to the communication circuit. The instructions may cause the electronic device to: establish a VPN connection based on an IP address of the electronic device with a VPN server through a relay server; determine whether the IP address is changed; determine, on the basis of a change of the IP address to a new IP address, whether the electronic device stores valid connection information related to the VPN server; transmit an IP change request including the new IP address to the relay server on the basis that the electronic device stores valid connection information related to the VPN server; and communicate with the VPN server on the VPN connection through the relay server on the basis of the new IP address.

## Description

### [Technical Field]

Embodiments of the disclosure relate to an electronic device communicating through a virtual private network connection and a storage medium thereof.

### [Background Art]

More and more services and additional functions are being provided through user terminals, e.g., smartphones, or other electronic devices. To meet the needs of various users and increase utility value of electronic devices, communication service carriers or device manufacturers are jumping into competitions to develop electronic devices with various features. Accordingly, various functions that are provided through electronic devices are evolving more and more.

The electronic device may communicate with a network entity (e.g., a server) through a virtual private network (VPN) for security. The virtual private network provides a point-to-point tunnel, and here the tunnel may refer to a security association (SA) between two devices (e.g., the electronic device and the server). The virtual private network creates a virtual private network connection between two devices through the Internet. The virtual private network masks an IP address in an internet protocol (IP) packet transmitted by a user (e.g., the electronic device) and encrypts data in the IP packet, so that an entity without receiving authority may not read the IP packet.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

Embodiments of the disclosure may provide an electronic device configured to maintain communication without creating a new connection when an IP address of the electronic device is changed in the virtual private network, and a storage medium thereof.

Embodiments of the disclosure may provide an electronic device configured to notify a relay server of a change of an IP address when the electronic device communicates with a virtual private network server through the relay server, and a storage medium thereof.

Objects of the disclosure are not limited to the foregoing, and other unmentioned objects would be apparent to one of ordinary skill in the art from the following description.

An electronic device according to an embodiment of the disclosure may include memory storing instructions, communication circuitry, and at least one processor operatively connected with the memory and the communication circuitry. The instructions may, when executed by the at least one processor, cause the electronic device to establish a VPN connection based on an IP address of the electronic device with a virtual private network (VPN) server through a relay server using the communication circuitry. The instructions may, when executed by the at least one processor, cause the electronic device to determine whether the IP address of the electronic device is changed. The instructions may, when executed by the at least one processor, cause the electronic device to determine, based on the IP address of the electronic device being changed to a new IP address, whether the electronic device stores valid connection information related to the VPN server. The instructions may, when executed by the at least one processor, cause the electronic device to transmit, based on the electronic device storing valid connection information related to the VPN server, an IP change request including the new IP address to the relay server. The instructions may, when executed by the at least one processor, cause the electronic device to communicate with the VPN server through the VPN connection via the relay server based on the new IP address.

A method according to an embodiment of the disclosure may include an operation of establishing a VPN connection based on an IP address of the electronic device with a virtual private network (VPN) server through a relay server. The method may include an operation of determining whether the IP address of the electronic device is changed. The method may include an operation of determining, based on the IP address of the electronic device being changed to a new IP address, whether the electronic device stores valid connection information related to the VPN server. The method may include an operation of transmitting, based on the electronic device storing valid connection information related to the VPN server, an IP change request including the new IP address to the relay server. The method may include an operation of communicating with the VPN server through the VPN connection via the relay server based on the new IP address.

In a non-transitory computer-readable storage medium storing one or more programs according to an embodiment of the disclosure, the one or more programs, when executed by at least one processor of the electronic device, may include instructions configured to cause the electronic device to: establish a VPN connection based on an IP address of the electronic device with a virtual private network (VPN) server through a relay server, determine whether the IP address of the electronic device is changed, determine, based on the IP address of the electronic device being changed to a new IP address, whether the electronic device stores valid connection information related to the VPN server, transmit, based on the electronic device storing valid connection information related to the VPN server, an IP change request including the new IP address to the relay server, and communicate with the VPN server through the VPN connection via the relay server based on the new IP address.

### [Brief Description of Drawings]

FIG. 1 is a view illustrating an electronic device in a network environment according to various embodiments.
FIG. 2 is a view illustrating a configuration of an electronic device communicating through a VPN according to an embodiment of the disclosure.
FIG. 3 is a view illustrating a communication method using a VPN according to an embodiment.
FIG. 4 is a view illustrating a communication method using a relay VPN according to an embodiment of the disclosure.
FIG. 5A is a view illustrating a system structure providing a communication service through a relay VPN connection according to an embodiment of the disclosure.
FIG. 5B is a view illustrating an example of a mapping table for managing an IP change according to an embodiment of the disclosure.
FIG. 6 is a flowchart illustrating an operation of an electronic device according to an embodiment of the disclosure.
FIG. 7 is a view illustrating a mapping table for a VPN connection according to an embodiment of the disclosure.
FIG. 8 is a view illustrating an update of a mapping table based on an IP address change according to an embodiment of the disclosure.
FIG. 9 illustrates a sequence diagram for describing a relay VPN connection procedure according to an embodiment of the disclosure.
FIG. 10 illustrates a sequence diagram for describing a procedure of notifying an IP address change according to an embodiment of the disclosure.
FIGS. 11A and 11B are views illustrating an IP address update method according to embodiments of the disclosure.
FIG. 12 is a flowchart illustrating an operation of setting an IP address update method according to an embodiment of the disclosure.
FIG. 13 is a view illustrating a UI notifying an IP address change according to an embodiment of the disclosure.

### [Mode for Carrying out the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

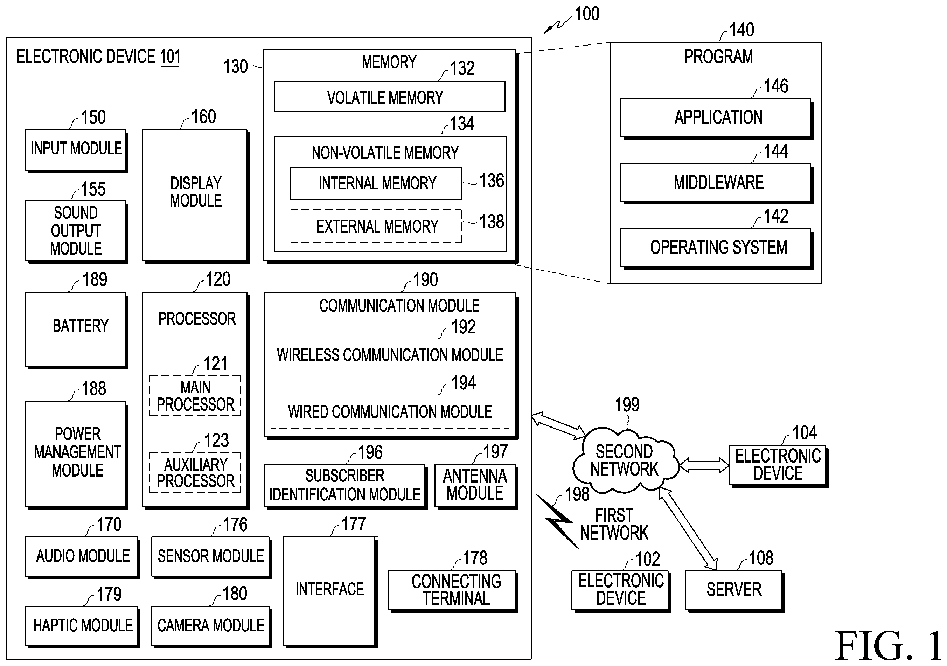

FIG. 1 is a block diagram illustrating an electronic device 101 in a network environment 100, according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

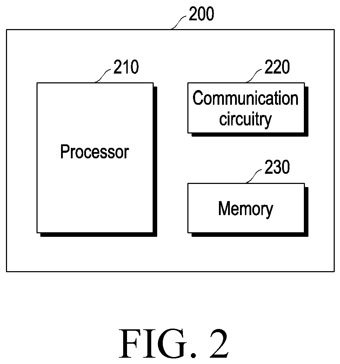

FIG. 2 is a view illustrating a configuration of an electronic device communicating through a VPN according to an embodiment of the disclosure.

Referring to FIG. 2, an electronic device 200 (e.g., the electronic device 101) may include at least one of a processor 210 (e.g., the processor 120), communication circuitry 220 (e.g., the communication module 190), or memory 230 (e.g., the memory 130). The electronic device 200 is not limited to a form including only the illustrated components, and the electronic device 200 may include more components than the illustrated components or may include fewer components.

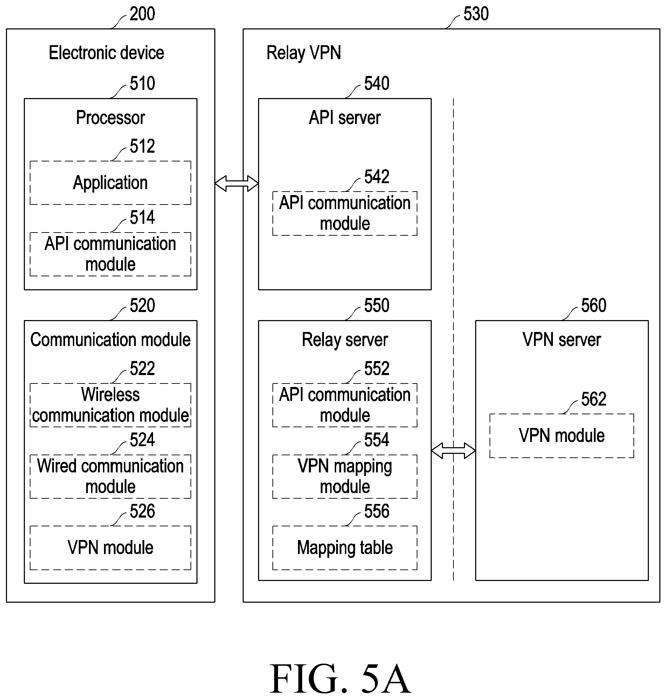

The electronic device 200 may communicate with an external electronic device (e.g., the API server 540, the relay server 550, and/or the VPN server 560 of FIG. 5A) using a wireless communication technology and/or a wired communication technology through the communication circuitry 220. In an embodiment, the electronic device 200 may access a data network (e.g., the Internet or a VPN) using Wi-Fi or using a cellular communication technology (e.g., 4G, 5G, or NR).

In an embodiment, the communication circuitry 220 may include one or more communication components transmitting and receiving signals using one or two or more antennas (not illustrated) with an external electronic device (e.g., the API server 540, the relay server 550, and/or the VPN server 560 of FIG. 5A). In an embodiment, the one or two or more antennas may be implemented as portion of the antenna module 198 of FIG. 1. According to an embodiment, the communication circuitry 220 may support a communication technology based on a Wi-Fi method and/or a cellular communication technology.

The electronic device 200 may include the processor 210 that may be implemented as one or two or more single-core processors or one or two or more multi-core processors, and the memory 230 storing instructions for an operation of the electronic device 200.

According to embodiments of the disclosure, the memory 230 may store instructions or related data for establishing, maintaining, and managing a VPN connection. According to embodiments of the disclosure, the processor 210 may execute at least one application using Internet communication and may control the communication circuitry 220 according to execution of the application.

According to an embodiment of the disclosure, the memory 230 may store data such as a basic program, an application program, and/or setting information for an operation of the electronic device 200. The memory 230 may provide the stored data according to a request of the processor 210. The memory 230 may be configured as a storage medium or a combination of storage media such as read only memory (ROM), random access memory (RAM), a hard disk, compact disc read only memory (CD-ROM), and digital versatile disc (DVD). The memory 230 may include one or more memories. The processor 210 may perform at least one of operations corresponding to the embodiments of the disclosure based on a program for performing at least one of operations corresponding to the embodiments of the disclosure stored in the memory 210.

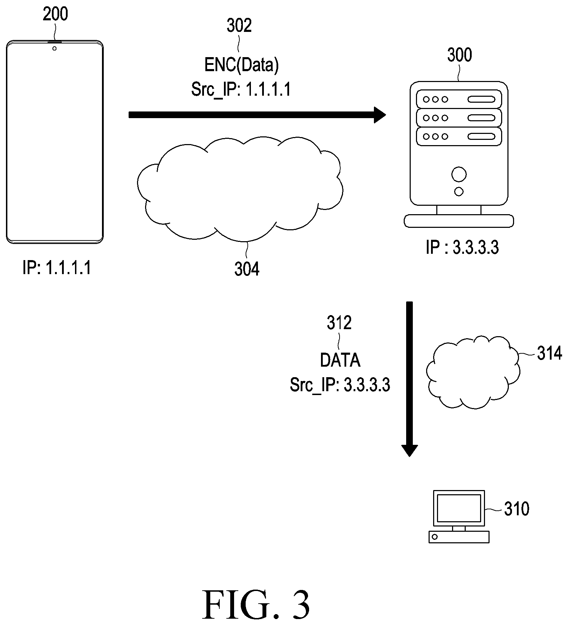

FIG. 3 is a view illustrating a communication method using a VPN according to an embodiment.

Referring to FIG. 3, the electronic device 200 (e.g., the electronic device 101) may communicate with a VPN server 300 using a VPN connection through a network (e.g., a Wi-Fi network and/or a cellular network) 304. The VPN connection may be based on a tunneling technology transmitting traffic (e.g., an IP packet 302) between the electronic device 200 and the server 300 in an encrypted form.

The electronic device 200 may safely transmit data (e.g., the IP packet 302) transmitted and received to and from the network using encryption information pre-disposed with the VPN server 300. The electronic device 200 and the VPN server 300 may exchange encryption information (e.g., an encryption algorithm and/or an encryption key) to be used in the VPN connection when establishing the VPN connection. The electronic device 200 may encrypt data according to previously exchanged encryption information and transmit the IP packet 302 including the encrypted data to the VPN server 300 through the network 304. Since the data transmitted from the electronic device 200 is encrypted, confidentiality of the data may be maintained in the network 304 between the electronic device 200 and the VPN server 300. The IP address of the electronic device 200 used in the network 304 is, e.g., 1.1.1.1, and the source IP address (Src_IP) of the IP packet 302 may be set to 1.1.1.1, which is the IP address of the electronic device 200.

When the IP packet 302 is delivered to the VPN server 300, the VPN server 300 may decrypt the data in the IP packet 302 using the previously agreed encryption information and may change the source IP address of the IP packet 302 to the IP address of the VPN server 300 (e.g., 3.3.3.3). An IP packet 314 including the data of the IP packet 302 and the changed source IP address (e.g., 3.3.3.3) may be transmitted from the VPN server 300 to a destination of the IP packet 302 (e.g., an external electronic device 310) through a network 314. Although data of the IP packet 312 is exposed without being encrypted in the network 314 between the VPN server 300 and the external electronic device 310, an unauthorized user (not illustrated) recognizes that the IP packet 312 is sent by the VPN server 300, not the electronic device 200, so the electronic device 200, which is an actual source of the IP packet 312, may be protected.

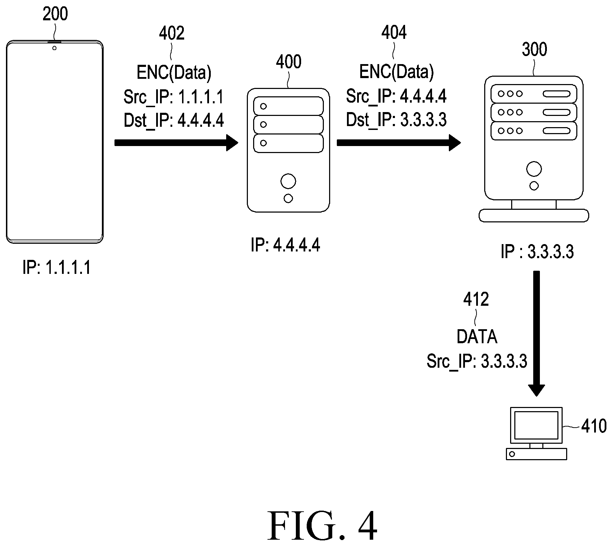

FIG. 4 is a view illustrating a communication method using a relay VPN according to an embodiment of the disclosure.

Referring to FIG. 4, the electronic device 200 (e.g., the electronic device 101) may communicate with the VPN server 300 through a relay server 400. The electronic device 200 may exchange encryption information (e.g., an encryption algorithm and/or an encryption key) to be used in the VPN connection to the VPN server 300 when establishing the VPN connection. When the electronic device 200 sends an IP packet 402, the electronic device 200 may set a destination IP address (Dst_IP) of the IP packet 402 not to the IP address of the VPN server 300 (e.g., 3.3.3.3.3) but to the IP address of the relay server 400 (e.g., 4.4.4.4). The source IP address of the IP packet 402 may be set to the IP address of the electronic device 200 (e.g., 1.1.1.1).

The relay server 400 may receive the IP packet 402, change the source IP address of the IP packet 402 to the IP address of the relay server 400 (e.g., 4.4.4.4), and set the destination IP address to the IP address of the VPN server 300 (e.g., 3.3.3.3). Here, since the data of the IP packet 402 is encrypted according to encryption information agreed between the electronic device 200 and the VPN server 300, the relay server 400 may not read the data of the IP packet 402. An IP packet 404 including the data of the IP packet 402, the changed source IP address, and the changed destination IP address may be delivered from the relay server 400 to the VPN server 300.

The VPN server 300 may receive the IP packet 404, change the source IP address of the IP packet 404 to the IP address of the VPN server 300 (e.g., 3.3.3.3), and set the destination IP address to an IP address of a counterpart device 410 with which the electronic device 200 intends to communicate. An IP packet 412 including the data of the IP packet 404, the changed source IP address, and the changed destination IP address may be delivered from the VPN server 300 to the counterpart device 410.

Since the source IP address of the IP packet 404 received by the VPN server 300 from the relay server 400 is the IP address of the relay server 400, the relay server 400 may not know the electronic device 200, which is an actual source of the IP packet 404. Accordingly, in communication between the electronic device 200 and the counterpart device 410, neither the VPN server 300 nor the relay server 400 may know both the source and the data.

The VPN structure may include a plurality of VPN servers (e.g., the VPN server 300) and a VPN mapping server (not illustrated) in order to smoothly provide a VPN service to a plurality of clients (e.g., the electronic device 200). When any one client establishes a VPN connection, the VPN mapping server may map an available VPN server to the client according to an algorithm defined by a service requested by the client. In a structure providing a relay VPN, the relay server (e.g., the relay server 400) may create, store, and manage a mapping table for mapping each client to the corresponding VPN server.

The IP address of the electronic device 200 may be changed for various reasons. For example, when the electronic device 200 is connected to a different network as a physical location of the electronic device 200 is moved, or when IP reassignment occurs in a Wi-Fi network to which the electronic device 200 is connected, the IP address of the electronic device 200 may be changed. In a structure such as FIG. 3 in which the electronic device 200 is directly connected to the VPN server 300, when the IP address of the electronic device 200 is changed, the server 300 may recognize the changed IP address of the electronic device 200 through handover. On the other hand, in a structure such as FIG. 4 in which the electronic device 200 is connected to the VPN server 300 through the relay server 400, since the electronic device 200 may not communicate directly with the VPN server 300, the VPN server 300 may not identify encrypted data included in the IP packet and thus may not recognize the IP address change of the electronic device 200 and may not support handover of the electronic device 200.

When the IP address of the electronic device 200 is changed while the electronic device 200 is communicating through a VPN connection, it may cause service inconvenience such as unnecessary traffic generation and service delay for both the user and the service provider for the electronic device 200 to newly establish a VPN connection to the new IP address in order to provide mapping information (e.g., a mapping table) for the new IP address to the relay server 400.

Embodiments of the disclosure may increase connection availability upon IP address change and save system resources by allowing the electronic device 200 to reuse an existing VPN connection through the new IP address without re-establishing a VPN connection for tunneling even when the IP address of the electronic device 200 is changed in a relay VPN structure.

FIG. 5A is a view illustrating a system structure providing a communication service through a relay VPN connection according to an embodiment of the disclosure.

Referring to FIG. 5A, the electronic device 200 may include a processor 510 (e.g., the processor 210) and a communication module 520 (e.g., the communication circuitry 220). The processor 510 may include at least one application 512 using Internet communication and detecting an IP address change, and an application programmable interface (API) communication module 514 generating an IP change request. The communication module 520 may include at least one of a wireless communication module 522 (e.g., the wireless communication module 192), a wired communication module 524 (e.g., the wired communication module 194), or a VPN module 526.

In an embodiment, the at least one application 512 may detect that the IP address of the electronic device 200 is changed while establishing a VPN connection to the VPN server 560 through the relay server 550 and performing Internet communication through the VPN connection. The processor 510 may generate an IP change request based on the at least one application 512 notifying the IP address change. In an embodiment, the IP change request may be included in an API command generated by the API communication module 514 or a packet according to a protocol and/or packet format (e.g., an unencrypted IP packet) pre-disposed between the electronic device 200 and the relay server 550. The IP change request may be transmitted to a relay server 530 through the communication module 520. In an embodiment, the VPN module 526 of the communication module 520 may deliver the IP change request to the relay server 530 through the wireless communication module 522 or the wired communication module 524. In an embodiment, when the IP change request is delivered through an API command, the API command may be delivered to the relay server 550 through the API communication module 542 of the API server 540.

In an embodiment, the processor 510 of the electronic device 200 may include the IP change request in a predetermined field of an API packet transmitted to the API server 540 and deliver it, and the API server 540 may deliver the API packet to the relay server 550. In an embodiment, the processor 510 of the electronic device 200 may deliver an API command including the IP change request to the relay server 550 through the API server 540. In an embodiment, the processor 510 of the electronic device 200 may include the IP change request in a predetermined field of a packet (e.g., an IP packet) in a pre-disposed format and deliver the packet including the IP change request to the relay server 550.

A relay VPN 530 may include at least one of the API server 540, the relay server 550 (e.g., the relay server 400), or the VPN server 560 (e.g., the VPN server 300). The API server 540 may include the API communication module 542 processing communication between the electronic device 200 and the relay server 550. The relay server 550 may include the API communication module 552 communicating with the electronic device 200 through the API server 540, and a VPN mapping module 554 storing and managing the mapping table 556 (e.g., the mapping table 710, 810, 1110, or 1120) between the electronic device 200 and the VPN server 560.

At least one of the API server 540, the relay server 550, or the VPN server 560 may be configured as an independent entity or may be configured as a combination of at least one. In an embodiment, the API server 540 may be located separately from the relay server 550 or may be configured in combination with the relay server 550. The API server 540 manages API communication between the electronic device 200 and the relay server 550, and may additionally perform additional functions such as customer management and/or VPN connection management. The VPN server 560 may include a VPN module 562 performing VPN communication with the electronic device 200.

The relay server 550 may receive the IP change request from the electronic device 200 and deliver the IP change request to the VPN mapping module 554. In an embodiment, the IP change request may be received by the API communication module 552. In an embodiment, the IP change request may be received using a protocol and/or packet format pre-disposed between the electronic device 200 and the relay server 550. The VPN mapping module 554 may include, based on the IP change request, mapping information for mapping the changed IP address (e.g., the new IP address) of the electronic device 200 to the VPN server 560 in the mapping table 556.

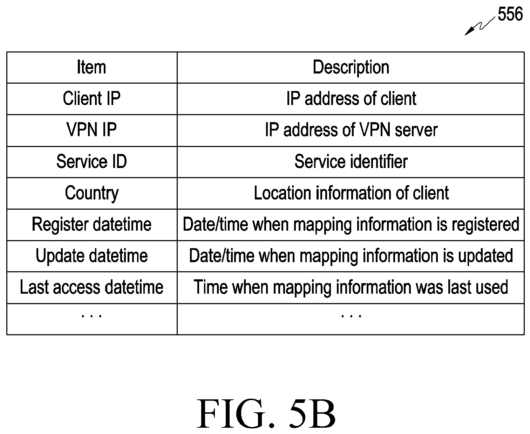

FIG. 5B is a view illustrating an example of a mapping table for managing an IP change according to an embodiment of the disclosure.

Referring to FIG. 5B, the mapping table (e.g., the mapping table 556) may include at least one of a client IP indicating an IP address of a client device (e.g., the electronic device 200), a VPN IP indicating an IP address of a VPN server (e.g., the VPN server 560), a service ID identifying a service of the client device, a country indicating a location of the client device in the case of a location-based VPN service, a register datetime indicating a date and/or time when mapping information is registered, an update datetime indicating a date and/or time when the mapping information is updated, or a last access datetime indicating a date and/or time when the mapping information was last used. Although not illustrated, according to embodiments, the mapping table 556 may further include an additional item such as usage.

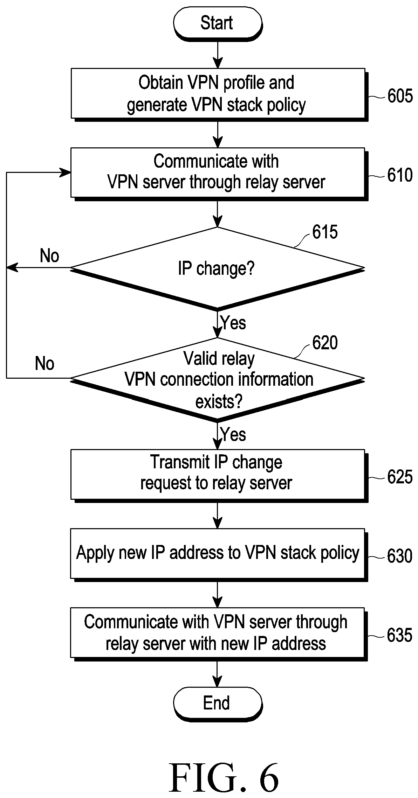

FIG. 6 is a flowchart illustrating an operation of an electronic device according to an embodiment of the disclosure. In an embodiment, at least one of operations described below may be executed by the processor 210 of the electronic device 200. In the following embodiment, each of the operations may be sequentially performed, but is not necessarily sequentially performed. For example, according to embodiments, at least one of the operations described below may be omitted, modified, or executed in a different order, and at least two operations may be performed in parallel.

Referring to FIG. 6, according to an embodiment, in operation 605, the electronic device 200 (e.g., the processor 210) may obtain a VPN profile for a VPN connection to a VPN server (e.g., the VPN server 560) through a relay server (e.g., the relay server 550) and may generate a VPN stack policy according to the VPN profile. In an embodiment, the VPN profile may include encryption information (e.g., an encryption algorithm and/or an encryption key) for tunneling between the electronic device 200 and the VPN server 560 and/or an IP address of the VPN server 560. The electronic device 200 may generate a VPN stack policy including encryption information according to the VPN profile, the IP address of the VPN server 560, and/or the IP address of the relay server 550, and may store the VPN stack policy in memory (e.g., the memory 230) in association with the VPN server 560.

In operation 610, the electronic device 200 (e.g., the processor 210) may perform VPN communication with the VPN server 560 through the relay server 550 based on the VPN stack policy. In an embodiment, the VPN communication may include an operation of generating an IP packet including the IP address of the electronic device 200 as a source IP address and including the IP address of the relay server 550 as a destination IP address, and transmitting the IP packet through the communication circuitry 220.

In operation 615, the electronic device 200 (e.g., the processor 210) may determine whether the IP address of the electronic device 200 has been changed. In an embodiment, when the electronic device 200 connects to a different network (e.g., a Wi-Fi network or a cellular network) due to movement of the electronic device 200, or when IP reassignment occurs in a current network (e.g., a Wi-Fi network or a cellular network) to which the electronic device 200 is connected, the electronic device 200 may determine that an IP address change occurs and may obtain the changed IP address (e.g., the new IP address). When the IP address of the electronic device 200 is not changed, the electronic device 200 (e.g., the processor 210) may return to operation 610 and continue to perform VPN communication using the current IP address. When the IP address of the electronic device 200 is changed, the electronic device 200 (e.g., the processor 210) may proceed to operation 620.

In operation 620, the electronic device 200 (e.g., the processor 210) may determine whether the electronic device 200 has valid VPN connection information (e.g., relay VPN connection information) related to the relay VPN. In an embodiment, when the electronic device 200 (e.g., the processor 210) is using Internet communication through a currently established VPN connection and the VPN connection includes a connection to the VPN server 560 through the relay server 550, the electronic device 200 (e.g., the processor 210) may determine that it has valid VPN connection information through the relay VPN 530 and proceed to operation 625.

In an embodiment, the electronic device 200 (e.g., the processor 210) may maintain connection information related to the VPN server 560 according to a predetermined condition even when the VPN connection to the VPN server 560 is deactivated (or released). In an embodiment, the connection information (e.g., the encryption information) may be obtained from the VPN server 560 when the VPN connection is established and may be valid until a predetermined expiration time. In an embodiment, even when the VPN connection to the VPN server 560 is deactivated (or released), when connection information related to the VPN server 560 is stored in memory (e.g., the memory 230) and/or when the stored connection information is valid (e.g., not expired), the electronic device 200 may proceed to operation 625 even when the electronic device 200 does not currently have a VPN connection established with the VPN server 560.

In an embodiment, when the electronic device 200 (e.g., the processor 210) does not have a VPN connection, or when the VPN connection includes a direct connection to the VPN server 560 (e.g., not through a relay server), or when the electronic device 200 does not store valid connection information (e.g., relay VPN connection information) related to the VPN connection, the electronic device 200 (e.g., the processor 210) may return to operation 610.

In operation 625, the electronic device 200 (e.g., the processor 210) may transmit an IP change request to the relay server 550. In an embodiment, the IP change request may be included in an API command generated by the API communication module 514 or a packet (e.g., an IP packet) in a predetermined format. In an embodiment, the IP change request may include the new IP address of the electronic device 200. In an embodiment, the IP change request may include information indicating a method of updating the IP address (e.g., replacement or addition).

In operation 630, the electronic device 200 (e.g., the processor 210) may apply the new IP address according to the IP address change to the VPN stack policy corresponding to the relay server 550 and the VPN server 560. In an embodiment, the electronic device 200 (e.g., the processor 210) may include the new IP address in the VPN stack policy.

In operation 635, the electronic device 200 (e.g., the processor 210) may perform VPN communication with the VPN server 560 through the relay server 550 based on the VPN stack policy including the new IP address. In an embodiment, the electronic device 200 (e.g., the processor 210) may continue to perform VPN communication based on the VPN stack policy including the new IP address without establishing a new VPN connection to the relay server 550.

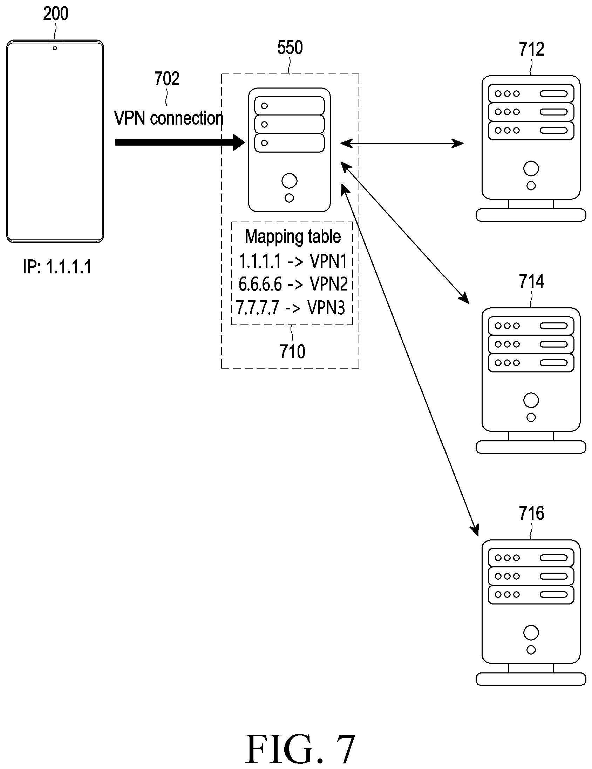

FIG. 7 is a view illustrating a mapping table for a VPN connection according to an embodiment of the disclosure.

Referring to FIG. 7, the electronic device 200 may be allocated a first IP address (e.g., 1.1.1.1) in a Wi-Fi network of, e.g., a public place (a park or a subway), and may establish a VPN connection 702 with a VPN server 1 712 through the relay server 550 using the first IP address. When the VPN connection 702 is established, the relay server 550 may add information (e.g., "1.1.1.1->VPN1") for mapping the first IP address of the electronic device 200 to the VPN server 1 712 to a mapping table 710. The mapping table 710 may include information (e.g., "6.6.6.6->VPN2, 7.7.7.7->VPN3") for mapping IP addresses of one or more clients (e.g., the electronic device 200) to one or more VPN servers (e.g., the VPN server 1 712, a VPN server 2 714, and a VPN server 3 716). Here, VPN1, VPN2, and VPN3 may refer to IP addresses of the VPN server 1 712, the VPN server 2 714, and the VPN server 3 716, respectively.

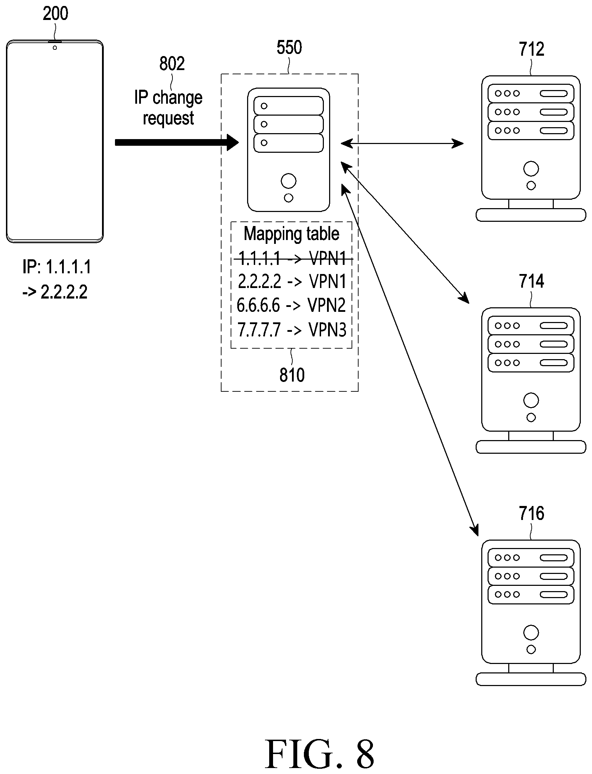

FIG. 8 is a view illustrating an update of a mapping table based on an IP address change according to an embodiment of the disclosure.

Referring to FIG. 8, the electronic device 200 may be allocated a second IP address (e.g., 2.2.2.2) by moving from the Wi-Fi network of FIG. 7 to a different network (e.g., a different Wi-Fi network or a cellular network) or due to IP reassignment in the Wi-Fi network of FIG. 7. Based on detecting that an IP address change occurs as the electronic device 200 obtains the second IP address while having the VPN connection 702 with the VPN server 1 712 through the relay server 550, the electronic device 200 may transmit an IP change request 802 to the relay server 550. In an embodiment, the IP change request 802 may be delivered through an API command. In an embodiment, an IP packet including the IP change request 802 may include a source IP address set to the new IP address (e.g., the second IP address 2.2.2.2) of the electronic device 200 and IP address change information. In an embodiment, the IP address change information may indicate that the IP address of the electronic device 200 is changed from the first IP address (e.g., 1.1.1.1) to the second IP address (e.g., 2.2.2.2).

After transmitting the IP change request 802, the electronic device 200 may reflect the second IP address (e.g., 2.2.2.2) in the VPN stack policy stored in the VPN module 526. The VPN stack policy may include an encryption algorithm, an encryption key, the second IP address of the electronic device 200, and/or the IP address of the relay server 550 related to the VPN connection 702.

The relay server 550 may add information (e.g., "2.2.2.2->VPN1") for mapping the second IP address of the electronic device 200 to the VPN server 1 712 to a mapping table 810 (e.g., the mapping table 1110 or 1120) in response to the IP change request 802. In an embodiment, the relay server 550 may replace existing mapping information (e.g., "1.1.1.1->VPN1") of the electronic device 200 with new mapping information (e.g., "2.2.2.2->VPN1") in the mapping table 810 (e.g., the mapping table 1110), or may add the new mapping information to the mapping table 810 (e.g., the mapping table 1120) while maintaining the existing mapping information, according to a predetermined or requested update method (e.g., replacement or addition) from the electronic device 200.

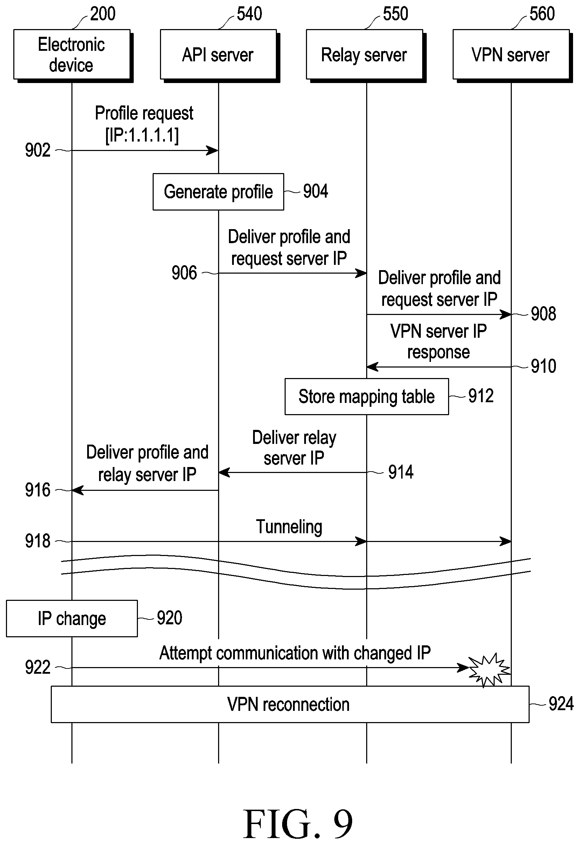

FIG. 9 illustrates a sequence diagram for describing a relay VPN connection procedure according to an embodiment of the disclosure. In the following embodiment, each of the operations may be sequentially performed, but is not necessarily sequentially performed. For example, according to embodiments, at least one of the operations described below may be omitted, modified, or executed in a different order, and at least two operations may be performed in parallel.

Referring to FIG. 9, according to an embodiment, in operation 902, the electronic device 200 may transmit a VPN profile request for a VPN connection to the API server 540. The VPN profile request may include the IP address of the electronic device 200 (e.g., the first IP address 1.1.1.1). In an embodiment, the VPN profile request may include VPN profile information requested by the electronic device 200. In operation 904, the API server 540 may generate a VPN profile for the electronic device 200 in response to the VPN profile request (e.g., the VPN profile information). The VPN profile may include encryption information (e.g., an encryption algorithm and/or an encryption key) to be shared between the electronic device 200 and a VPN server (e.g., the VPN server 560) and/or a VPN ID identifying the VPN connection.

In operation 906, the API server 540 may deliver the VPN profile and the first IP address (e.g., 1.1.1.1) of the electronic device 200 to the relay server 550 while querying for an IP address of a VPN server to connect. In operation 908, the relay server 550 may query the VPN server 560 for an IP address of a VPN server to connect while delivering the VPN profile. In this case, the IP address of the electronic device 200 (e.g., the first IP address 1.1.1.1) may not be delivered to the VPN server 560. In operation 910, the VPN server 560 may respond with the IP address of the VPN server 560 (e.g., 30.30.30.30) to the relay server 550. Although not illustrated, a VPN server IP address query from the relay server 550 may be delivered to a VPN mapping server (not illustrated), and the VPN mapping server may respond with the IP address of the VPN server 560 to the relay server 550.

In operation 912, the relay server 550 may store mapping information of the IP address (e.g., the first IP address 1.1.1.1) of the electronic device 200 received from the API server 540 and the IP address (e.g., 30.30.30.30) of the VPN server 560 in a mapping table (e.g., the mapping table 710). For example, the mapping information may include (client, vpn) = (1.1.1.1, 30.30.30.30).

In operations 914 and 916, the relay server 550 may transmit the VPN profile provided from the API server 540 and the IP address (e.g., 200.200.200.200) of the relay server 550 to the electronic device 200 through the API server 540. In an embodiment, in operation 914, the relay server 550 may transmit the IP address of the relay server 550 to the API server 540 and, in operation 916, the API server 540 may transmit the VPN profile and the IP address of the relay server 550 to the electronic device 200. The electronic device 200 may store a VPN stack policy based on the VPN profile in the VPN module 526.

In operation 918, the electronic device 200 may perform communication using tunneling through the VPN connection established through operations 902 to 916.

A procedure in which the electronic device 200 communicates through the VPN connection in operation 918 is described as follows. The electronic device 200 may encrypt data to be transmitted and an actual destination address (e.g., real_dst) using an encryption algorithm and an encryption key stored in a VPN policy stack of the VPN module 526. The electronic device 200 may set a destination address (dst_IP) of an IP packet including the encrypted data (e.g., the data to be transmitted and the destination address) to 200.200.200.200, which is the IP address of the relay server 550, and transmit the IP packet to the relay server 550. For example, the IP packet transmitted by the electronic device 200 may include {src_IP: 1.1.1.1, dst_IP: 200.200.200.200, ENC(real_dst: X.X.X.X, data to be transmitted)}. Here, ENC() may refer to encrypted data.

The relay server 550 may receive the IP packet and discover the IP address (e.g., 30.30.30.30) of the VPN server 560 mapped to the electronic device 200 in the mapping table (e.g., the mapping table 710). Based on the mapping table, the relay server 550 may reset the source IP address and the destination IP address of the IP packet to the IP address of the relay server 550 and the IP address of the VPN server 560, respectively. For example, a reset IP packet (e.g., a second IP packet) may include {src_IP: 200.200.200.200, dst_IP: 30.30.30.30, ENC(real_dst: X.X.X.X, data to be transmitted)}. The relay server 550 may transmit the second IP packet to the VPN server 560.

The VPN server 560 may decrypt encrypted data (e.g., ENC(real_dst: X.X.X.X, data to be transmitted)) included in the second IP packet with an encryption algorithm and an encryption key pre-disposed with the electronic device 200 to obtain an actual destination address (e.g., X.X.X.X) and the data to be transmitted. The VPN server 560 may transmit an IP packet (e.g., a third IP packet) including the IP address of the VPN server 560 as a source IP address and including the actual destination address and the decrypted data to the actual destination address.

When the VPN server 560 receives an IP packet (e.g., a fourth IP packet) from the actual destination address, the VPN server 560 may encrypt the fourth IP packet and transmit it to the relay server 550. The relay server 550 may deliver the encrypted fourth IP packet to the electronic device 200. Since actual data of the fourth IP packet delivered through the relay server 550 is encrypted, the relay server 550 may not know the actual data. Since the source IP address of the IP packet passing through the VPN server 560 is set to the IP address of the relay server 550, the VPN server 560 may not know that the electronic device 200 is a source of the IP packet.

In operation 920, the electronic device 200 may detect that the IP address of the electronic device 200 is changed. For example, the IP address of the electronic device 200 may be changed from 1.1.1.1 to 2.2.2.2. In operation 922, when the electronic device 200 transmits an IP packet based on the changed IP address (e.g., 2.2.2.2) without an IP change request, the IP packet may not reach the relay server 550 or the VPN server 560, or may be discarded at the relay server 550 or the VPN server 560. In operation 924, the electronic device 200 may perform VPN reconnection (e.g., operations 902 to 916) with the VPN server 560 through the relay server 550 based on, e.g., not receiving a response (e.g., ACK) to the IP packet within a designated time.

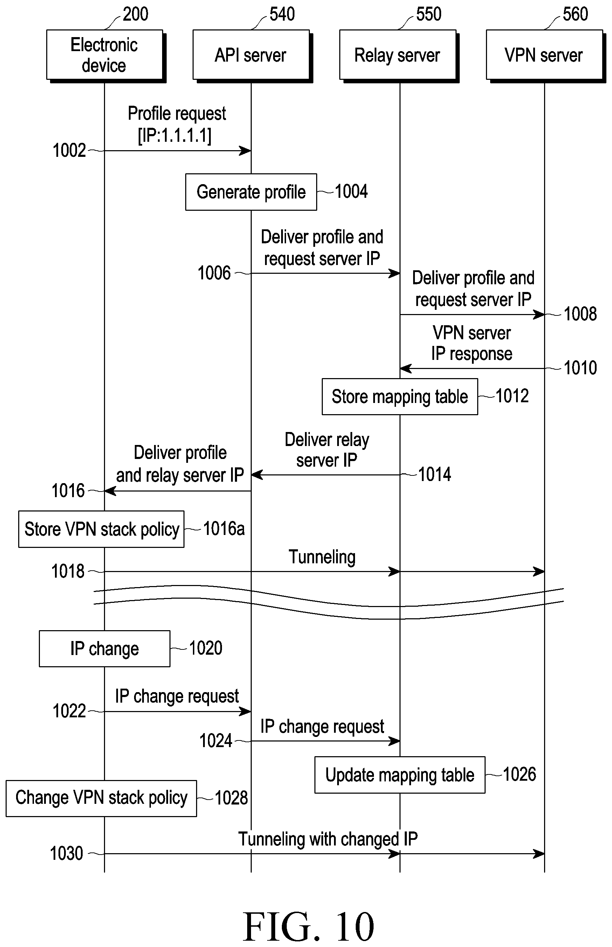

FIG. 10 illustrates a sequence diagram for describing a procedure of notifying an IP address change according to an embodiment of the disclosure. In an embodiment, operations 1002 to 1018 may be identical or similar to operations 902 to 918. In the following embodiment, each of the operations may be sequentially performed, but is not necessarily sequentially performed. For example, according to embodiments, at least one of the operations described below may be omitted, modified, or executed in a different order, and at least two operations may be performed in parallel.

Referring to FIG. 10, according to an embodiment, in operation 1002, the electronic device 200 may transmit a VPN profile request for a VPN connection to the API server 540. The VPN profile request may include the IP address of the electronic device 200 (e.g., the first IP address 1.1.1.1). In an embodiment, the VPN profile request may include VPN profile information requested by the electronic device 200. In operation 1004, the API server 540 may generate a VPN profile for the electronic device 200 in response to the VPN profile request (e.g., the VPN profile information). The VPN profile may include encryption information (e.g., an encryption algorithm and/or an encryption key) to be shared between the electronic device 200 and a VPN server (e.g., the VPN server 560) and/or a VPN ID identifying the VPN connection.

In operation 1006, the API server 540 may deliver the VPN profile and the first IP address (e.g., 1.1.1.1) of the electronic device 200 to the relay server 550 while querying for an IP address of a VPN server to connect. In operation 1008, the relay server 550 may query the VPN server 560 for an IP address of a VPN server to connect while delivering the VPN profile. In this case, the IP address of the electronic device 200 (e.g., the first IP address 1.1.1.1) may not be delivered to the VPN server 560. In operation 1010, the VPN server 560 may respond with the IP address of the VPN server 560 (e.g., 30.30.30.30) to the relay server 550.

In operation 1012, the relay server 550 may store mapping information of the IP address (e.g., the first IP address 1.1.1.1) of the electronic device 200 received from the API server 540 and the IP address (e.g., 30.30.30.30) of the VPN server 560 in a mapping table (e.g., the mapping table 710). For example, the mapping information may include (client, vpn) = (1.1.1.1, 30.30.30.30).

In operations 1014 and 1016, the relay server 550 may transmit the VPN profile provided from the API server 540 and the IP address (e.g., 200.200.200.200) of the relay server 550 to the electronic device 200 through the API server 540. In operation 1016a, the electronic device 200 may store a VPN stack policy based on the VPN profile in the VPN module 526. In an embodiment, the VPN stack policy may include at least one of a VPN ID, encryption information, an IP address of the electronic device 200, an IP address of the relay server 550, or an IP address of the VPN server 560. In operation 1018, the electronic device 200 may perform communication using tunneling through the VPN connection established through operations 1002 to 1016.

In operation 1020, the electronic device 200 may detect that the IP address of the electronic device 200 is changed to a new IP address (e.g., 2.2.2.2) while the VPN connection to the VPN server 560 is maintained or while connection information (e.g., relay VPN connection information) related to the VPN connection is valid. In an embodiment, the electronic device 200 may detect the IP address change through the wireless communication module 522 or the wired communication module 524.

In operations 1022 and 1024, the electronic device 200 may transmit an IP change request to the relay server 550 through the API server 540. In an embodiment, in operation 1022, the electronic device 200 may generate an API command including the IP change request by the API communication module 514 and transmit it to the API server 540 through the communication module 520. In operation 1024, the API server 540 may transmit the API command including the IP change request to the relay server 550 by the API communication module 542. In an embodiment, the IP change request may include information (e.g., "1.1.1.1 -> 2.2.2.2") notifying that the IP address of the electronic device 200 is changed. In an embodiment, the IP change request (e.g., the API command) may be received directly from the electronic device 200 to the relay server 550 (e.g., the API communication module 552) instead of passing through the API server 540. The API communication module 552 of the relay server 550 may deliver the IP change request to the VPN mapping module 554.

In operation 1026, the relay server 550 may update the new IP address (e.g., 2.2.2.2) of the electronic device 200 in a mapping table (e.g., the mapping table 810) based on the IP change request received by the VPN mapping module 554.

In operation 1028, the electronic device 200 may apply the new IP address to a VPN stack policy managed in the VPN module 526 based on detecting the IP address change in operation 1020. In an embodiment, the electronic device 200 may change the IP address of the VPN stack policy to the new IP address.

In operation 1030, the electronic device 200 may continue to perform communication (e.g., tunneling) using the new IP address through the VPN connection established through operations 1002 to 1016 based on the VPN stack policy including the new IP address.

In an embodiment, the relay server 550 may replace existing mapping information (e.g., "1.1.1.1->VPN1") of the electronic device 200 with new mapping information (e.g., "2.2.2.2->VPN1") in the mapping table 810, or may add the new mapping information to the mapping table 810 while maintaining the existing mapping information, according to a predetermined or requested update method (e.g., replacement or addition) from the electronic device 200. The electronic device 200 may determine an update method of the IP address through a user input and may transmit information on the determined update method to the relay server 550.

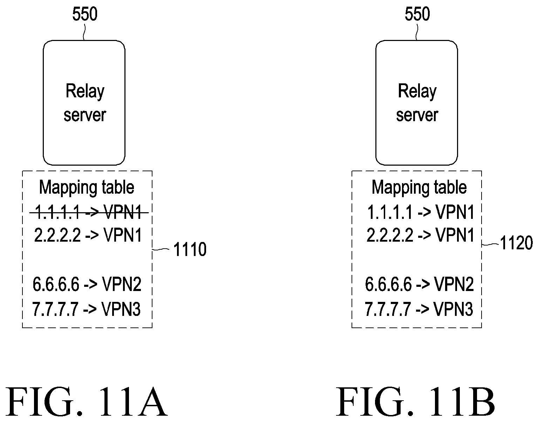

FIGS. 11A and 11B are views illustrating an IP address update method according to embodiments of the disclosure.

Referring to FIG. 11A, the relay server 550 may include (e.g., store) a mapping table 1110. The relay server 550 that received an IP change request (e.g., the IP change request in operation 1022) may replace existing mapping information (e.g., "1.1.1.1->VPN1") in the mapping table 1110 with new mapping information (e.g., "2.2.2.2->VPN1") based on the IP change request. Here, VPN1 may refer to the IP address (e.g., 30.30.30.30) of the VPN server 560. The relay server 550 may map the electronic device 200 to the VPN server 560 in a 1:1 manner without storing an unnecessary resource (e.g., the existing mapping information).

Referring to FIG. 11B, the relay server 550 may include (e.g., store) a mapping table 1120. The relay server 550 that received an IP change request (e.g., the IP change request in operation 1022) may add new mapping information (e.g., "2.2.2.2->VPN1") based on the IP change request to the mapping table 1120 without deleting existing mapping information (e.g., "1.1.1.1->VPN1") in the mapping table 1120. For example, the mapping table 1120 may include all of a plurality of mapping information items (e.g., 1.1.1.1 -> 30.30.30.30 and 2.2.2.2 -> 30.30.30.30) of the electronic device 200.

In an embodiment, in a network environment, a circumstance in which a connected network is changed according to a physical location of the electronic device 200 may frequently occur. For example, as the electronic device 200 moves within a wide space, the electronic device 200 may move from a Wi-Fi network of AP1 to a Wi-Fi network of AP2, then return to the Wi-Fi network of AP1, and be connected again to the Wi-Fi network of AP1. The relay server 550 may provide a VPN service to the electronic device 200 without delay by utilizing existing mapping information without repeating deletion and addition of mapping information in a circumstance in which a connected network of the electronic device 200 is frequently changed.

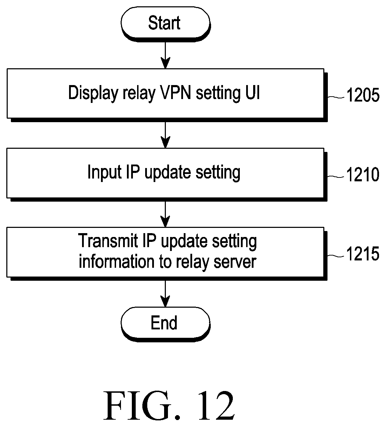

FIG. 12 is a flowchart illustrating an operation of setting an IP address update method according to an embodiment of the disclosure. In an embodiment, at least one of operations described below may be executed by the processor 210 of the electronic device 200. In the following embodiment, each of the operations may be sequentially performed, but is not necessarily sequentially performed. For example, according to embodiments, at least one of the operations described below may be omitted, modified, or executed in a different order, and at least two operations may be performed in parallel.

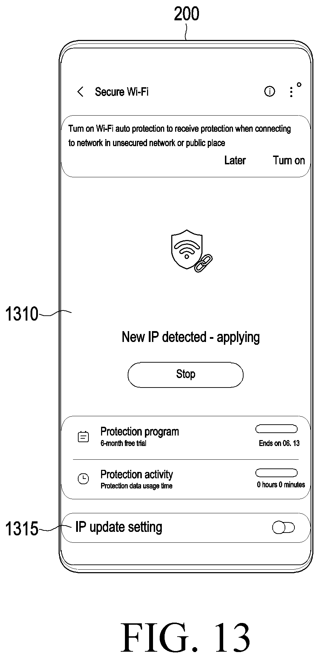

Referring to FIG. 12, in an embodiment, in operation 1205, the electronic device 200 (e.g., the processor 210) may display a relay VPN setting user interface (UI) related to a relay VPN connection (e.g., through the display module 160). In an embodiment, the relay VPN setting UI may include an object (e.g., an IP update method setting object 1315 of FIG. 13) for receiving an IP update method. The object may be configured to receive a user input for selecting a method of updating an IP address change in the relay VPN connection as either replacement or addition. In an embodiment, the electronic device 200 (e.g., the processor 210) may display the relay VPN setting UI based on a user input requesting relay VPN setting or while setting a relay VPN connection.

In operation 1210, the electronic device 200 (e.g., the processor 210) may receive a user input for selecting an IP update method as either replacement or addition through the relay VPN setting UI. In operation 1215, the electronic device 200 (e.g., the processor 210) may transmit IP update setting information indicating an IP update method based on the user input to the relay server 550. In an embodiment, the IP update setting information may be included in a profile request (e.g., the profile request in operation 1002), an IP change request (e.g., the IP change request in operation 1022), or a designated IP packet and delivered to the relay server 550.

In an embodiment, the electronic device 200 or the relay server 550 may determine an update method of an IP address for each designated IP address. In an embodiment, the electronic device 200 or the relay server 550 may set an update method of an IP address for an IP address set by the user or an IP address group.

FIG. 13 is a view illustrating a UI notifying an IP address change according to an embodiment of the disclosure.

Referring to FIG. 13, the electronic device 200 may display information 1310 notifying an IP address change (e.g., through the display module 160) while an IP address change for a new IP address is being processed (e.g., at least one of operation 1020, operation 1022, operation 1024, operation 1026, or operation 1028). In an embodiment, the information 1310 may include at least one of a phrase notifying an IP address change (e.g., "New IP detected - Applying") or an object 1315 for setting an update method of an IP address. In an embodiment, the information 1310 may be displayed through any one of a notification, a popup, a push, or a top indicator by the application 512 of the electronic device 200. In an embodiment, the information 1310 may be displayed in the form of any one of an icon, text, or animation.

Embodiments of the disclosure may prevent service delay and/or unnecessary traffic by maintaining existing tunneling (e.g., the existing VPN connection) without re-establishing end-to-end tunneling upon IP change due to movement or handover of the electronic device 200 in a relay VPN environment. Embodiments of the disclosure may increase connection availability upon IP address change and save resources of the electronic device 200 and the network (e.g., the API server 540, the relay server 550, and/or the VPN server 560) by reusing an existing tunnel (e.g., the VPN connection).

An electronic device 200 according to an embodiment of the disclosure may include memory 230 storing instructions, communication circuitry 220, and at least one processor 210 operatively connected with the memory and the communication circuitry. The instructions may, when executed by the at least one processor, cause the electronic device to establish a VPN connection based on an IP address of the electronic device with a virtual private network (VPN) server 560 through a relay server 550 using the communication circuitry. The instructions may, when executed by the at least one processor, cause the electronic device to determine whether the IP address of the electronic device is changed. The instructions may, when executed by the at least one processor, cause the electronic device to determine, based on the IP address of the electronic device being changed to a new IP address, whether the electronic device stores valid connection information related to the VPN server. The instructions may cause the at least one processor to transmit, based on the electronic device storing valid connection information related to the VPN server, an IP change request including the new IP address to the relay server. The instructions may, when executed by the at least one processor, cause the electronic device to communicate with the VPN server through the VPN connection via the relay server based on the new IP address.

In an embodiment, the instructions may cause the electronic device to generate a VPN stack policy related to the VPN connection while establishing the VPN connection, and apply the new IP address to the VPN stack policy based on the IP address of the electronic device being changed to the new IP address.

In an embodiment, the VPN stack policy may be configured to include an encryption algorithm and/or an encryption key for tunneling between the electronic device and the VPN server.

In an embodiment, the instructions may cause the electronic device to transmit the IP address change request to the relay server to cause the relay server to store the new IP address in a mapping table in association with the VPN server.

In an embodiment, the IP address change request may be included in an application programmable interface (API) command and transmitted from the electronic device to the relay server.

In an embodiment, the instructions may cause the electronic device to transmit, to the relay server, IP update setting information indicating a method of updating the new IP address in the relay server as either replacement or addition.

In an embodiment, the IP address change request may include IP update setting information indicating a method of updating the new IP address in the relay server as either replacement or addition.

In an embodiment, the IP update setting information may instruct, when the method of updating the new IP address is indicated as replacement, the relay server to replace first mapping information for mapping the IP address of the electronic device to the VPN server with second mapping information for mapping the IP address of the electronic device to the VPN server.

In an embodiment, the IP update setting information may instruct, when the method of updating the new IP address is indicated as addition, the relay server to maintain first mapping information for mapping the IP address of the electronic device to the VPN server and additionally store second mapping information for mapping the IP address of the electronic device to the VPN server.

In an embodiment, the instructions may cause the electronic device to display a relay VPN setting user interface (UI) and receive, through the relay VPN setting UI, a user input for selecting the method of updating the new IP address as either replacement or addition.

In a non-transitory computer-readable storage medium storing one or more programs according to an embodiment of the disclosure, the one or more programs, when executed by at least one processor 210 of an electronic device 200, may include instructions configured to cause the electronic device to: establish a VPN connection based on an IP address of the electronic device with a virtual private network (VPN) server 560 through a relay server 550, determine whether the IP address of the electronic device is changed, determine, based on the IP address of the electronic device being changed to a new IP address, whether the electronic device stores valid connection information related to the VPN server, transmit, based on the electronic device storing valid connection information related to the VPN server, an IP change request including the new IP address to the relay server, and communicate with the VPN server through the VPN connection via the relay server based on the new IP address.

In an embodiment, the at least one program may include instructions configured to cause the electronic device to: generate a VPN stack policy related to the VPN connection while establishing the VPN connection, and apply the new IP address to the VPN stack policy based on the IP address of the electronic device being changed to the new IP address.

In an embodiment, the VPN stack policy may include an encryption algorithm and/or an encryption key for tunneling between the electronic device and the VPN server.

In an embodiment, the at least one program may include instructions configured to cause the electronic device to: transmit the IP address change request to the relay server to cause the relay server to store the new IP address in a mapping table in association with the VPN server.

In an embodiment, the IP address change request may be included in an application programmable interface (API) command and transmitted from the electronic device to the relay server.

In an embodiment, the at least one program may include instructions configured to cause the electronic device to: transmit, to the relay server, IP update setting information indicating a method of updating the new IP address in the relay server as either replacement or addition.

In an embodiment, the IP address change request may include IP update setting information indicating a method of updating the new IP address in the relay server as either replacement or addition.

In an embodiment, the IP update setting information may instruct, when the method of updating the new IP address is indicated as replacement, the relay server to replace first mapping information for mapping the IP address of the electronic device to the VPN server with second mapping information for mapping the IP address of the electronic device to the VPN server.

In an embodiment, the IP update setting information may instruct, when the method of updating the new IP address is indicated as addition, the relay server to maintain first mapping information for mapping the IP address of the electronic device to the VPN server and additionally store second mapping information for mapping the IP address of the electronic device to the VPN server.

In an embodiment, the at least one program may include instructions configured to cause the electronic device to: display a relay VPN setting user interface (UI) and receive, through the relay VPN setting UI, a user input for selecting the method of updating the new IP address as either replacement or addition.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 240) including one or more instructions that are stored in a storage medium (e.g., internal memory 236 or external memory 238) that is readable by a machine (e.g., the electronic device 201). For example, a processor (e.g., the processor 220) of the machine (e.g., the electronic device 201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (200) comprising:
memory (230) storing instructions;
communication circuitry (220); and
at least one processor (210) operatively connected with the memory and the communication circuitry, wherein the instructions, when executed by the at least one processor, cause the electronic device to:
establish a virtual private network (VPN) connection based on an internet protocol (IP) address of the electronic device with a VPN server (560) through a relay server (550) using the communication circuitry;
determine whether the IP address of the electronic device is changed;
based on the IP address of the electronic device being changed to a new IP address, determine whether the electronic device stores valid connection information related to the VPN server;
based on the electronic device storing valid connection information related to the VPN server, transmit an IP change request including the new IP address to the relay server; and
communicate with the VPN server on the VPN connection through the relay server based on the new IP address.

2. The electronic device of claim 1, wherein the instructions cause the electronic device to:
generate a VPN stack policy related to the VPN connection while establishing the VPN connection; and
apply the new IP address to the VPN stack policy based on the IP address of the electronic device being changed to the new IP address.

3. The electronic device of claim 1 or 2, wherein the VPN stack policy comprises
an encryption algorithm and/or an encryption key for tunneling between the electronic device and the VPN server.

4. The electronic device of any one of claims 1 to 3, wherein the instructions cause the electronic device to:
transmit the IP address change request to the relay server to cause the relay server to store the new IP address in a mapping table in association with the VPN server.

5. The electronic device of any one of claims 1 to 4, wherein the IP address change request is included in an application programmable interface (API) command and transmitted from the electronic device to the relay server.

6. The electronic device of any one of claims 1 to 5, wherein the instructions cause the electronic device to:
transmit, to the relay server, IP update setting information indicating a method of updating, in the relay server, the new IP address as either replacement or addition.

7. The electronic device of any one of claims 1 to 5, wherein the IP address change request comprises IP update setting information indicating a method of updating the new IP address in the relay server as either replacement or addition.

8. The electronic device of claim 6 or 7, wherein the IP update setting information is configured to instruct, when the method of updating the new IP address is indicated as replacement, the relay server to replace first mapping information for mapping the IP address of the electronic device to the VPN server with second mapping information for mapping the IP address of the electronic device to the VPN server.

9. The electronic device of claim 6 or 7, wherein the IP update setting information is configured to instruct, when the method of updating the new IP address is indicated as addition, the relay server to maintain first mapping information for mapping the IP address of the electronic device to the VPN server and additionally store second mapping information for mapping the IP address of the electronic device to the VPN server.

10. The electronic device of any one of claims 6 to 9, wherein the instructions cause the electronic device to:
display a relay VPN setting user interface (UI); and
receive, through the relay VPN setting UI, a user input for selecting the method of updating the new IP address as either replacement or addition.

11. A non-transitory computer-readable storage medium storing one or more programs, wherein the one or more programs, when executed by at least one processor (210) of an electronic device (200), cause the electronic device to:
establish a virtual private network (VPN) connection based on an IP address of the electronic device with a VPN server (560) through a relay server (550);
determine whether the IP address of the electronic device is changed;
based on the IP address of the electronic device being changed to a new IP address, determine whether the electronic device stores valid connection information related to the VPN server;
based on the electronic device storing valid connection information related to the VPN server, transmit an IP change request including the new IP address to the relay server; and
communicate with the VPN server on the VPN connection through the relay server based on the new IP address.

12. The storage medium of claim 11, wherein the at least one program includes instructions configured to cause the electronic device to:
generate a VPN stack policy related to the VPN connection while establishing the VPN connection; and
apply the new IP address to the VPN stack policy based on the IP address of the electronic device being changed to the new IP address, and
the VPN stack policy includes an encryption algorithm and/or an encryption key for tunneling between the electronic device and the VPN server.

13. The storage medium of claim 11 or 12, wherein the at least one program includes instructions configured to cause the electronic device to:
transmit the IP address change request to the relay server to cause the relay server to store the new IP address in a mapping table in association with the VPN server, and
the IP address change request is included in an application programmable interface (API) command and transmitted from the electronic device to the relay server.

14. The storage medium of any one of claims 11 to 13, wherein the at least one program includes instructions configured to cause the electronic device to:
transmit, to the relay server, IP update setting information indicating a method of updating the new IP address in the relay server as either replacement or addition, and
the IP address change request includes
IP update setting information indicating a method of updating the new IP address in the relay server as either replacement or addition,
the IP update setting information is configured to instruct, when the method of updating the new IP address is indicated as replacement, the relay server to replace first mapping information for mapping the IP address of the electronic device to the VPN server with second mapping information for mapping the IP address of the electronic device to the VPN server, and
the IP update setting information is configured to instruct, when the method of updating the new IP address is indicated as addition, the relay server to maintain first mapping information for mapping the IP address of the electronic device to the VPN server and additionally store second mapping information for mapping the IP address of the electronic device to the VPN server.

15. The storage medium of claim 14, wherein the at least one program includes instructions configured to cause the electronic device to:
display a relay VPN setting user interface (UI) through a display module; and
receive, through the relay VPN setting UI, a user input for selecting the method of updating the new IP address as either replacement or addition.
